# EUROPEAN PATENT SPECIFICATION

(11) **EP 2 846 625 B1**
(45) Date of publication and mention of the grant of the patent: **15.02.2017**
(21) Application number: 13724425.7
(22) Date of filing: 06.05.2013
(51) Int. Cl.: A01J 5/08

(54) **A TEATCUP LINER**
ZITZENGUMMI
MANCHON TRAYEUR

(30) Priority: 07.05.2012 SE 1250457; 07.05.2012 US 201213465527
(43) Date of publication of application: 18.03.2015
(60) Divisional application: 16205885.3
(73) Proprietor: DeLaval Holding AB, 147 21 Tumba (SE)
(72) Inventor: ÄLVEBY, Nils, S-124 51 Bandhagen (SE)
(74) Representative: Lilliehorn, Tobias
(86) International application number: PCT/SE2013/050500
(87) International publication number: WO 2013/169186

(56) References cited:
- WO-A1-2009/042022
- FR-A- 499 796
- US-A- 1 312 941
- US-A- 1 365 665
- US-A- 4 530 307
- US-A- 6 164 243
- US-A1- 2011 126 768

## Description

### TECHNICAL FIELD OF THE INVENTION

The present invention refers to a teatcup liner configured to be mounted in a shell of a teatcup to be applied to a teat of an animal according to the preamble of claim 1.

### BACKGROUND OF THE INVENTION AND PRIOR ART

Teatcup liners having a barrel with various cross-sectional shapes are known. A barrel with a circular cross-sectional shape is common and have an advantage of a fast and complete milking.

US-6,164,243 discloses a teatcup liner comprising a head end portion, a barrel, and an outlet tube. The barrel has a triangular shape with three corner portions and three side portions extending along the length of the barrel. Each of the side portions is curved or bulged outwardly in a rest state.

FR-953,779 discloses another teatcup comprising a shell and a teatcup liner, both having a triangular cross-section with outwardly curved or bulged side portions in a rest state.

Teatcup liners having a barrel with a triangular cross-sectional shape are advantageous in the sense that they are considered to result in a gentle teat treatment during the milking operation. A disadvantage of such triangular or polygonal teatcup liners is, however, that they do not shut off the vacuum completely, resulting in a slower milking.

WO 2009/042022 discloses a teatcup liner having a barrel with a square cross-section.

EP-958 738 discloses a teatcup liner having a barrel with a wave-shape cross-section.

US 2011/0126768 discloses a liner with a barrel having a triangular cross section in a rest state. In a collapsed condition, the barrel having a cross-sectional configuration that forms one or more air passages along at least a portion of the length thereof for flow of air from the mouthpiece to facilitate air and milk flow to and through a region beneath the teat to a milk tube.

### SUMMARY OF THE INVENTION

The object of the present invention is to overcome the problems discussed above and to provide a teatcup liner providing an efficient milking and securing a gentle treatment of the teat during the milking operation.

This object is achieved by the teatcup liner initially defined, which is characterised in that the inner radius is equal for each corner portion and that the inner radius of each of the corner portions in the rest state is at least 4 mm at a centre part of the corner portion.

Teatcup liners with for instance a triangular cross-sectional shape of the barrel, whereby the shape is approaching a perfect triangle, will have relatively acute corners towards the inner space. However, the teat is not capable of being deformed to such an extent that these corners are filled by the teat, but there will remain an empty space between the teat and the inner surface of the teatcup liner during the entire milking also when the teatcup liner is collapsed.

The inventor of the present invention has realised this problem and has arrived at the understanding that this problem may be solved by providing the inner surface of the corner portions with a relatively large radius at a centre part of the corner portion, especially at least 4 mm. The teatcup liner according to the present invention will thus permit the teat to fill up the inner space of the teatcup liner during the whole pulsating cycles of the milking operation and to have a good contact with the teatcup liner. Consequently, the teatcup liner of the present invention ensures a proper and efficient milking performance.

In addition, the polygonal cross-sectional shape will result in low strains and pressures against the teat in the region close to the teat end or teat tip, and thus to a gentle treatment of the teat.

For the interpretation of the claims, it is to be noted that the rest state may refer to the state when the teatcup liner is not mounted in the shell of the teatcup and thus not subjected to any external forces at all. However, the rest state may also refer to the state when the teatcup liner is mounted in the shell of the teatcup, and not subjected to any further external forces other than from the tensioning resulting from the mounting of the teatcup liner in the shell of the teatcup. In any case, the teatcup liner is not subjected to for instance a milking vacuum or a pulsating vacuum in the rest state, or to the forces or pressures arising when the teat is introduced into the inner space of the teatcup liner.

According to an embodiment of the invention, the inner radius of each of the corner portions is at least 5 mm at the centre part of the corner portion.

According to the invention, each of the side portions is in the rest state curved inwardly towards the longitudinal axis. Such an inwardly directed curvature or bulging contributes to a uniform collapsing of the teatcup liner, and ensures that all side portions of the barrel of the teatcup liner collapse properly. Advantageously, each of the side portions may in the rest state be curved inwardly towards the longitudinal axis along the length of the barrel.

According to a further embodiment of the invention, each side portion comprises an inner surface facing the inner space and having an inner radius extending from a position outside the inner space to the inner surface, wherein the inner radius of each of the side portions is in the rest state at least 20 mm and at the most 100 mm at a centre part of the side portion. Advantageously, the inner radius of each of the side portions may in the rest state be at least 30 mm and at the most 50 mm at the centre part of the side portion.

According to a further embodiment of the invention, a border line between the corner portion and the side portion is located at an inner transition point, at which a tangent of the inner surface of the corner portion and a tangent of the inner surface of the side portion are parallel and coincide with each other. In such a way a smooth transition between the inner surface of the corner portion and the inner surface of the side portion is ensured.

According to a further embodiment of the invention, each corner portion comprises an outer surface facing away from the inner space and having an outer radius extending from the inner space to the outer surface, wherein each side portion comprises an outer surface facing away from the inner space and having an outer radius extending from a position outside the inner space to the outer surface, and wherein a border line between the corner portion and the side portion is located at an outer transition point, at which a tangent of the outer surface of the corner portion and a tangent of the outer surface of the side portion are parallel and coincide with each other. In such a way a smooth transition between the outer surface of the corner portion and the outer surface of the side portion is ensured.

According to the invention, each of the side portions has a first wall thickness at least at a centre part of the side portion along the length of the barrel, and each of the corner portions has a second wall thickness at least at the centre part of the corner portion along the length of the barrel, wherein the first wall thickness is smaller than the second wall thickness. Such a difference in the wall thickness between the side portion and the corner portion also contribute to a proper collapsing of each of the side portions. According to the invention, the ratio of the first wall thickness to the second wall thickness lies in the range 0,3 to 0,7. Especially, the ratio of the first wall thickness to the second wall thickness may be 0,5, or approximately 0,5.

Preferably, the first wall thickness of the side portions may be 1 to 2,6 mm, and the second wall thickness of the corner portions may be 2,3 to 6 mm.

According to a further embodiment of the invention, the barrel is tapering along the length from the head to the outlet portion. In spite of the tapering of the barrel, the inner radius is within the limits defined above for the centre part of the corner portions along the whole length of the barrel.

According to the invention, the barrel and the inner space have the polygonal cross-sectional shape, which defines at least three and at the most four corner portions, and thus at least three and at the most four side portions. The barrel and the inner space thus have an approximately triangular or approximately square cross-sectional shape.

According to a further embodiment of the invention, the barrel and the inner space, in the rest state, have an approximately triangular, or triangular, cross-sectional shape transversely to the longitudinal axis along the length from the head to the outlet portion, the cross-sectional shape thereby defining three corner portions and three side portions each connecting two of said corner portions.

According to a further embodiment of the invention, the teatcup liner also comprises, along the longitudinal axis, a head comprising a lip and an opening for the teat, and an outlet portion, and wherein the barrel extends along the length from the head to the outlet portion.

According to a further embodiment of the invention, the head is an integrated part of the teatcup liner. According to another embodiment of the invention, the head is a separate part attached to the barrel to form the teatcup liner.

According to a further embodiment of the invention, the outlet portion forms a short milk conduit. According to another embodiment of the invention, the outlet portion comprises a nipple configured to permit connection of the outlet portion to a separate short milk conduit.

### BRIEF DESCRIPTION OF THE DRAWINGS

The present invention will now be explained more closely by means of a description of various embodiments and with reference to the drawings attached hereto.
- Fig 1: discloses a longitudinal side view of a first embodiment of a teatcup liner according to the invention.
- Fig 2: discloses a view from above of the teatcup liner in Fig 1.
- Fig 3: discloses a longitudinal sectional view of a shell and the teatcup liner in Fig 1.
- Fig 4: discloses a sectional view of the teatcup liner along the line IV-IV in Fig 1.
- Fig 5: discloses a sectional view of the teatcup liner along the line V-V in Fig 1.
- Fig 6: discloses a longitudinal side view of a second embodiment of a teatcup liner according to the invention.
- Fig 7: discloses a sectional view of the teatcup liner along the line VII-VII in Fig 6.
- Fig 8: discloses a longitudinal side view of a third embodiment of a teatcup liner according to the invention.
- Fig 9: discloses a sectional view of the teatcup liner along the line IX-IX in Fig 8.
- Fig 10: discloses a another longitudinal side view of the third embodiment of the teatcup liner in Fig 8.
- Fig 11: discloses a sectional view of the teatcup liner along the line XI-XI in Fig 10.

### DETAILED DESCRIPTION OF VARIOUS EMBODIMENTS OF THE INVENTION

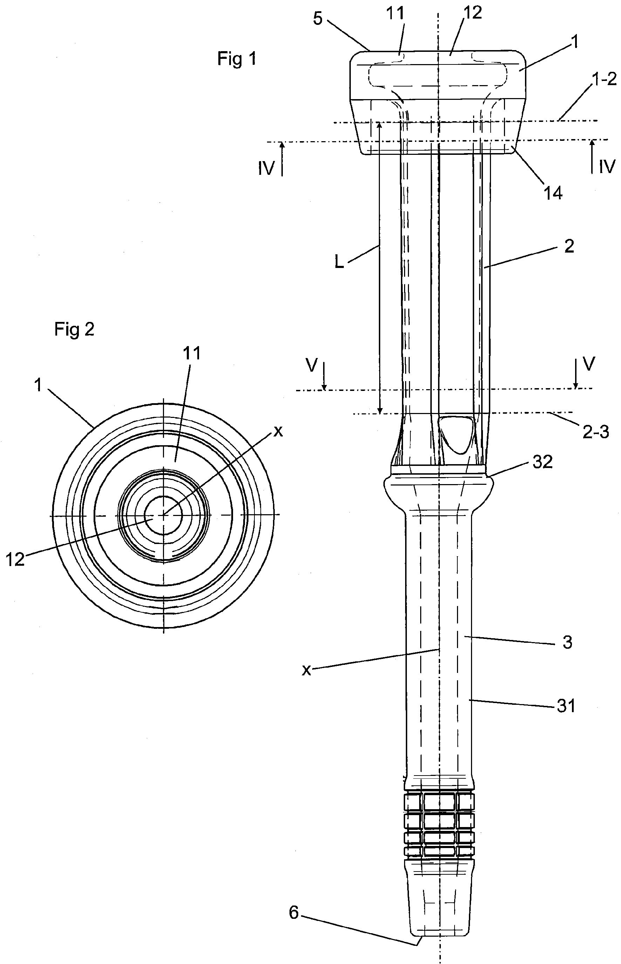

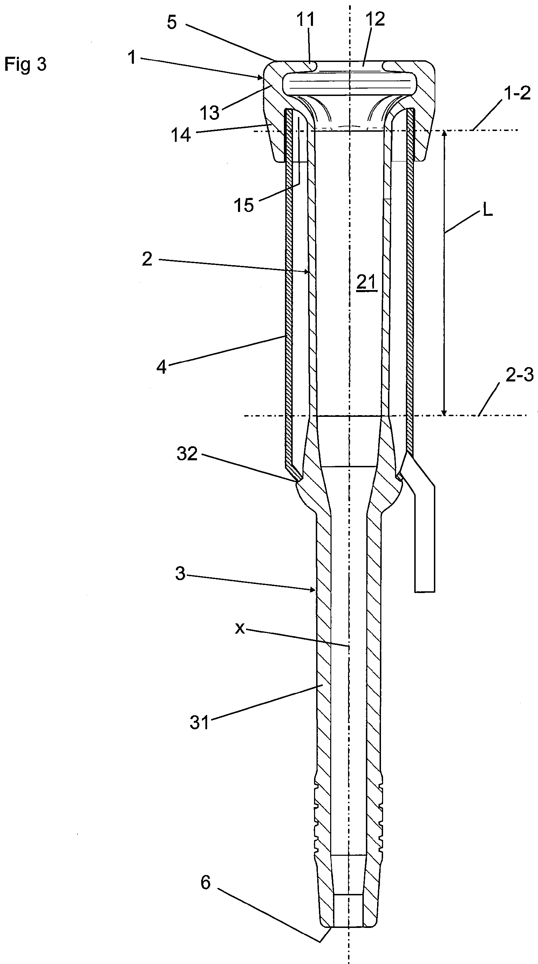

Figs 1 and 2 disclose a teatcup liner comprising a head 1, a barrel 2 and an outlet portion 3. As can be seen in Fig 3, the teatcup liner is configured to be mounted in a shell 4 of a teatcup, i.e. the teacup liner and the shell 4 may form the teatcup, to be applied to a teat of an animal.

The teatcup liner has a longitudinal shape and extends along a longitudinal axis x. The head 1, the barrel 2 and the outlet portion 3 are provided subsequently after each other along the longitudinal axis x. In the first and second embodiments, the head 1, the barrel 2 and the outlet end 3 are manufactured in one piece of one elastomeric material, such as natural or synthetic rubber, thermo-plastic elastomers, etc. It is to be noted that the head 1 and/or the outlet portion 3 may be manufactured in another, possibly less elastomeric material than the barrel 2.

The border between the head 1 and the barrel 2 is indicated by the line 1-2 in Figs 1 and 2. The border between the barrel 2 and the outlet portion 3 is indicated by the line 2-3 in Figs 1 and 2.

The head 1 forms a first end 5 of the teatcup liner. The first end 5 forms an upper end of the teatcup liner to be applied against the udder of the animal during milking.

The head 1 comprises a lip 11 forming an opening 12 for the teat. Furthermore, the head 1 comprises an annular base 13 from which the lip 11 extends towards the longitudinal axis x. The annular base 13 extends from the first end 5 to the barrel 2, i.e. to the border line 1-2.

The head 1 may also comprise a collar 14 which extends from the annular base 13 towards the outlet portion 3, and forms an annular recess 15 for receiving a first end of the shell 4.

The barrel 2 has a length L and defines an inner space 21 for receiving the teat. The barrel 2 extends along the longitudinal axis x from the head 1, i.e. the annular base 13 of the head 1, to the outlet portion 3. The length L of the barrel 2 is significantly larger than the length of the head 1 along the longitudinal axis x.

The barrel 2 is in the embodiments disclosed tapering, or slightly tapering, along the length L from the head 1 to the outlet portion 3. However, it is to be noted that the barrel 2 also may have a cylindrical shape, i.e. without any taper.

The outlet portion 3 thus extends from the barrel 2 to a second end 6 of the teatcup liner. In the first and second embodiments, the outlet portion 3 comprises a short milk conduit 31 extending to the second end 6 and being configured to be attached to a claw or any other similar milk-receiving member (not disclosed). It is to be noted that the outlet portion 3 may be shorter than disclosed, i.e. the short milk conduit 31 is replaced by an outlet member, such as a nipple or the like, to be attached to a separate short milk conduit.

The outlet portion 3 also comprises means, such as a shoulder 32, a groove or a recess, to engage a second end of the shell 4 when the teatcup liner is mounted in the shell 4 to form the teatcup.

The teatcup liner is disclosed in a rest state, or a mounted rest state, in Fig 2. As mentioned above, the rest state may refer to the state when the teatcup liner is mounted in the shell 4, but not subjected to any further external forces other than from the tensioning resulting from the mounting of the teatcup liner in the shell of the teatcup, i.e. the teatcup liner is not subjected to a milking vacuum or a pulsating vacuum, or to the forces or pressures arising when the teat is introduced into the inner space 21.

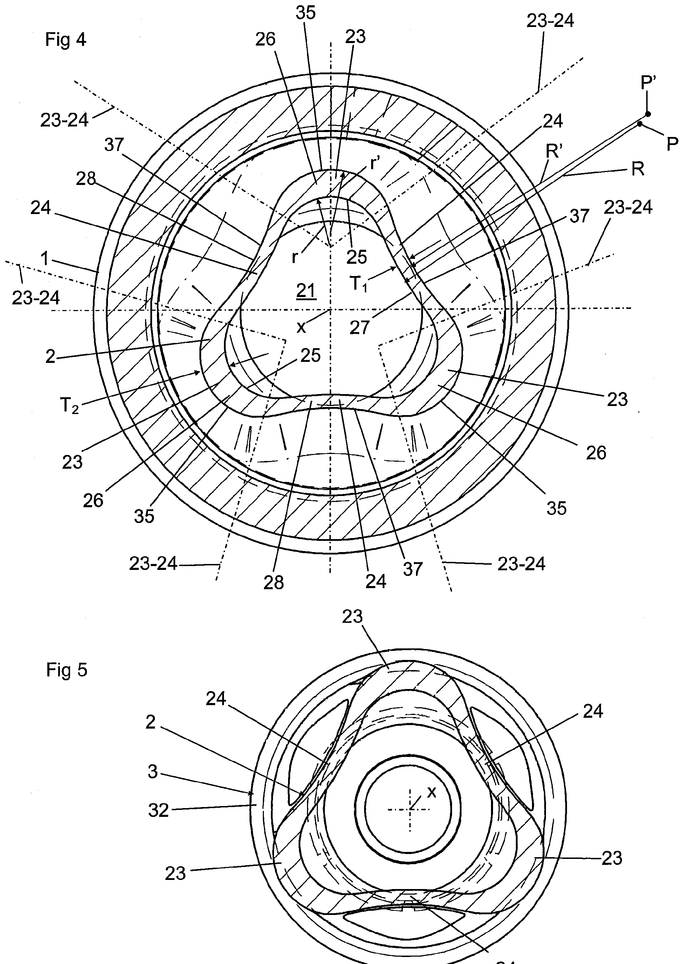

As can be seen in Figs 4 and 5, the barrel 2 and the inner space 21 have, in the rest state, a polygonal cross-sectional shape with three corners, or a triangular, or an approximately triangular, cross-sectional shape, seen transversely to the longitudinal axis x, preferably along the whole, or substantially the whole, length L from the head 1 to the outlet portion 3. The triangular cross-sectional shape defines three corner portions 23 and three side portions 24. Each side portion 24 connects two of the corner portions 24. The borders between the corner portions 23 and the side portions 24 are indicated by the border lines 23-24 in Fig 4, i.e. the corner portions 23 and the side portions 24 are separated from each other by a border line 23-24.

Each corner portion 23 comprises an inner surface 25 facing the inner space 21 and having a concave curvature towards the inner space 21 with an inner radius r extending from the inner space 21 to the inner surface 25. The inner radius r of the corner portions 23 is relatively long, especially in comparison with the inner radius of the corner portion of a perfectly triangular shape.

In the embodiments disclosed, the inner radius r is equal for each corner portion 23. Moreover, the inner radius r of each of the corner portions 23 is in the rest state at least 4 mm at at least a centre part 26 of the corner portion 23. More specifically, the inner radius r of each of the corner portions 23 may be at least 5 mm at at least the centre part 26 of the corner portion 23, possibly along the whole corner portions 23. It is to be noted that these limits for the inner radius r are valid for the inner surface 25 of the corner portions 23 along the whole length L, or substantially the whole length L, of the barrel 2.

As also can be seen in Figs 4 and 5, each of the side portions 24 of the barrel 2 is in the rest state curved inwardly towards the longitudinal axis x, preferably along the whole length L, or substantially the whole length L, of the barrel 2. Each side portion 24 comprises an inner surface 27 facing the inner space 21 and having a convex curvature towards the inner space 21 with an inner radius R extending from a position P outside the inner space 21 to the inner surface 27. The inner radius R of each of the side portions 24 is larger than, or significantly larger than, the inner radius r of the corner portions 23.

The inner radius R of each of the side portions 24 is in the rest state at least 20 mm and at the most 60 mm at at least a centre part 28 of the side portion, or possibly at the whole side portions 24, preferably at least 30 mm and at the most 50 mm, more preferably at least 35 mm and at the most 45 mm. Especially, the inner radius R of each of the side portions 24 may be approximately 40 mm. It is to be noted that these limits for the inner radius R of each of the side portions 24 are valid for the inner surface 27 of the side portions 24 along the whole length L, or substantially the whole length L, of the barrel 2.

The border line 23-24 between the corner portion 23 and the side portion 24 is located at an inner transition point in a cross-sectional plane, or inner transition line along the length L, at the inner surfaces 25, 27, where the inner radius r of the corner portion 23 is transferred to the inner radius R of the side portion 24. As can be seen in Figs 4 and 5, there is no discontinuity at this inner transition point, where the border line 23-24 intersects the inner surfaces 25, 27. In other words, a tangent of the inner surface 25 of the corner portion 23, in said cross-sectional plane, and the tangent of the inner surface 27 of the side portion 24, in said cross sectional plane, are parallel and coincide with each other at the inner transition point.

Moreover, each corner portion 23 comprises an outer surface 35 facing outwardly, away from the inner space 21 and having a convex curvature with an outer radius r' extending from the inner space 21 to the outer surface 35. The outer radius r' is longer than the inner radius r in the rest state of the barrel 2.

Also each side portion 24 comprises an outer surface 37 facing outwardly, away from the inner space 21 and having a concave curvature with an outer radius R' extending from a position P outside the inner space 21 to the outer surface 37. It is to be noted that the outer radius R' must not extend from the same position P as the inner radius R. The outer radius R' of each of the side portions 24 is larger than, or significantly larger than, the outer radius r' of the corner portions 23.

The border line 23-24 between the corner portion 23 and the side portion 24 is located at an outer transition point in a cross-sectional plane, or outer transition line along the length L, at the outer surfaces 35, 37, where the outer radius r' of the corner portion 23 is transferred to the outer radius R' of the side portion 24. As can be seen in Figs 4 and 5, there is no discontinuity at this outer transition point where the border line 23-24 intersects the outer surfaces 35, 37. In other words, a tangent of the outer surface 35 of the corner portion 23, in said cross-sectional plane, and a tangent of the outer surface 37 of the side portion 24, in said cross-sectional plane, are parallel and coincide with each other at the outer transition point.

Each of the side portions 24 of the barrel 2 has a first wall thickness T₁ at least at the centre part 28 of the side portion 24 along length L, or the whole length L, of the barrel 2. Each of the corner portions 23 has a second wall thickness T₂ at least at the centre part 26 of the corner portion 23 along the length L, or the whole length L, of the barrel 2. As can be seen in Figs 4 and 5, the first wall thickness T₁ is smaller than the second wall thickness T₂. Preferably, the ratio of the first wall thickness T₁ to the second wall thickness T₂ may lie in the range 0,3 to 0,7. More preferably, the ratio of the first wall thickness T₁ to the second wall thickness T₂ may be approximately 0,5.

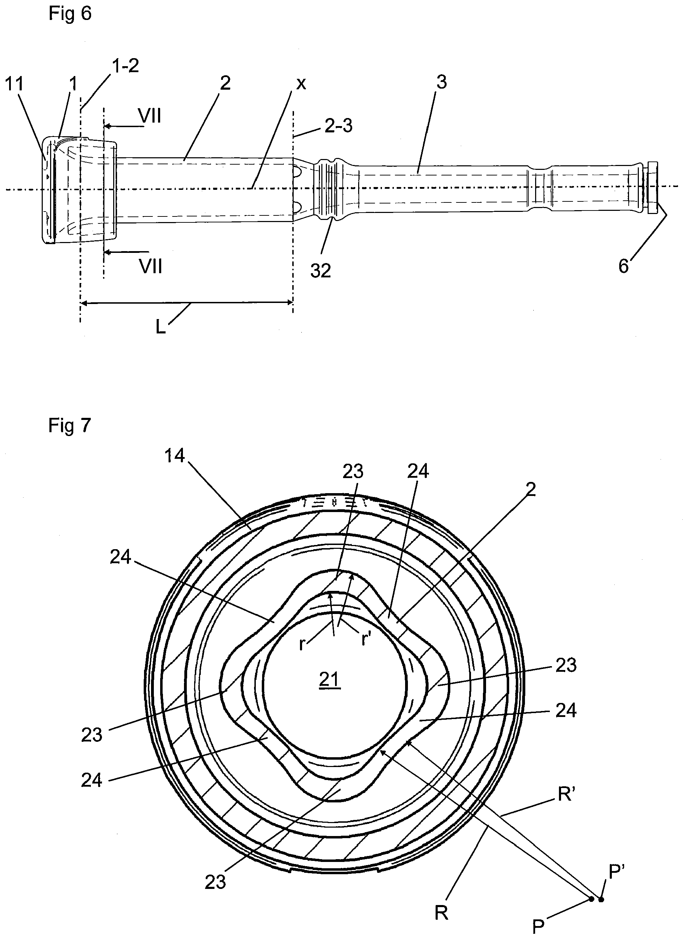

It is to be noted that the barrel 2 may have a polygonal cross-sectional shape with another number of corner portions 23 and side portions 24 than disclosed in the first embodiment. Figs 6 and 7 disclose a second embodiment, which differs from the first embodiment only in that the barrel 2 and the inner space 21 have a polygonal cross-sectional shape with four corner portions 23 and four side portions 24.

Also a cross-sectional shape with five corner portions 23 and five side portions 24 (not disclosed in the drawings) may be possible.

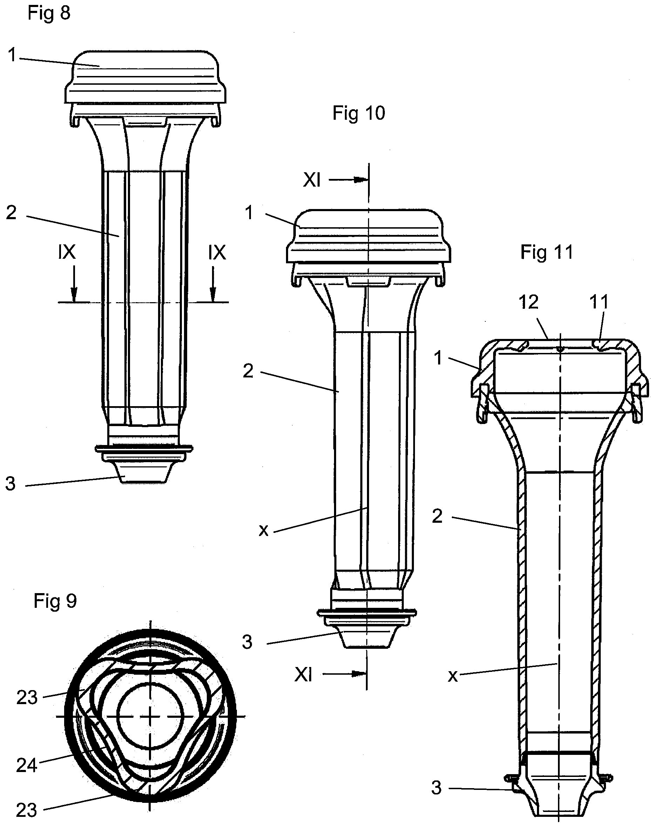

Figs 8 - 11 disclose a third embodiment of the teatcup liner. It is to be noted that elements having the same or corresponding functions in the embodiments disclosed have been given the same reference signs. In the third embodiment, the outlet portion 3 comprises or is designed as a nipple configured to permit connection of the outlet portion 3 and the barrel 2 to a separate short milk conduit 31 (not disclosed in Figs 8 - 11).

Furthermore, in the third embodiment the head 1, which comprises the lip 11 forming the opening 12 for the teat, is separate from the barrel 2. The head 1 may be permanently attached to the barrel 2 or detachably attached to the barrel 2. The barrel 2 has the same configuration as the barrel 2 in the first and second embodiments with three, four or possibly five corner portions 23 and three, four or possibly five side portions 24. Such a separate head 1 permits use of different materials, or materials having different properties, e.g. with respect to the elasticity, for the barrel 2 and the head 1 or the lip 11.

It is to be noted that the outlet portion 3 of the third embodiment may be combined with the first and second embodiments, or alternatively that the separate head portion may be combined with the first and second embodiments.

The present invention is not limited to the embodiments disclosed but may be varied and modified within the scope of the following claims.

## Claims

1. A teatcup liner configured to be mounted in a shell (4) of a teatcup to be applied to a teat of an animal, and having a longitudinal shape extending along a longitudinal axis (x), the teatcup liner comprising a barrel (2) having a length (L) along the longitudinal axis (x) and defining an inner space (21) for receiving the teat, wherein the barrel (2), in a rest state, has a polygonal cross-sectional shape transversely to the longitudinal axis (x), the polygonal cross-sectional shape defining a plurality of corner portions (23) and a plurality of side portions (24), each connecting two of said corner portions (23), and wherein each corner portion (23) comprises an inner surface (25) with a concave curvature facing the inner space (21) and having an inner radius (r) extending from the inner space (21) to the inner surface (25),
wherein the barrel (2) and the inner space (21) have the polygonal cross-sectional shape, which defines at least three and at the most four corner portions (23), and at least three and at the most four side portions (24), wherein
each of the side portions (24) has a first wall thickness (T₁) at least at a centre part (28) of the side portion (24) along the length (L) of the barrel (2),
each of the corner portions (23) has a second wall thickness (T₂) at least at the centre part (26) of the corner portion (23) along the length (L) of the barrel (2), and
the first wall thickness (T₂) is smaller than the second wall thickness (T₂), **characterised in that** the inner radius (r) is equal for each corner portion (23) and that the inner radius (r) of each of the corner portions (23) in the rest state is at least 4 mm at a centre part (26) of the corner portion (23), wherein each of the side portions (24) is in the rest state curved inwardly towards the longitudinal axis (x) and **in that** the ratio of the first wall thickness (T₁) to the second wall thickness (T₂) lies in the range 0,3 to 0,7.

2. A teatcup liner according to claim 1, wherein the inner radius (r) of each of the corner portions (23) is at least 5 mm at the centre part (26) of the corner portion (23).

3. A teatcup liner according to any of claims 1 and 2, wherein each of the side portions (24) is in the rest state curved inwardly towards the longitudinal axis (x) along the length (L) of the barrel (2).

4. A teatcup liner according to any one of claims 1 and 3, wherein each side portion (24) comprises an inner surface (27) facing the inner space (21) and having an inner radius (R) extending from a position (P) outside the inner space (21) to the inner surface (27), and wherein the inner radius (R) of each of the side portions (24) in the rest state is at least 20 mm and at the most 60 mm at a centre part (28) of the side portion (24).

5. A teatcup liner according to claim 4, wherein the inner radius (R) of each of the side portions (24) in the rest state is at least 30 mm and at the most 50 mm at the centre part (28) of the side portion (24).

6. A teatcup liner according to any one of claims 4 and 5, wherein a border line (23-24) between the corner portion (23) and the side portion (24) is located at an inner transition point, at which a tangent of the inner surface (25) of the corner portion (23) and a tangent of the inner surface (27) of the side portion (24) are parallel and coincide with each other.

7. A teatcup liner according to any one of the preceding claims,
wherein each corner portion (23) comprises an outer surface (35) facing away from the inner space (21) and having an outer radius (r') extending from the inner space (21) to the outer surface (35),
wherein each side portion (24) comprises an outer surface (37) facing away from the inner space (21) and having an outer radius (R') extending from a position outside the inner space (21) to the outer surface (37), and
wherein a border line (23-24) between the corner portion (23) and the side portion (24) is located at an outer transition point, at which a tangent of the outer surface (35) of the corner portion (23) and a tangent of the outer surface (27) of the side portion (24) are parallel and coincide with each other.

8. A teatcup liner according to any of the preceding claims, wherein the ratio of the first wall thickness (T₁) to the second wall thickness (T₂) is approximately 0,5.

9. A teatcup liner according to any one of the preceding claims, wherein the barrel (2) is tapering along the length (L) from the head (1) to the outlet portion (3).

10. A teatcup liner according to any one of the preceding claims, wherein the barrel (2) and the inner space (21), in the rest state, have an approximately triangular cross-sectional shape transversely to the longitudinal axis along the length (L) from the head (1) to the outlet portion (3), the cross-sectional shape thereby defining three corner portions (23) and three side portions (24) each connecting two of said corner portions (23).

11. A teatcup liner according to any one of the preceding claims, wherein the teatcup liner also comprises, along the longitudinal axis (x), a head (1) comprising a lip (11) and an opening (12) for the teat, and an outlet portion (3), and wherein the barrel (2) extends along the length (L) from the head (1) to the outlet portion (3).

12. A teatcup liner according to claim 11, wherein the head (1) is an integrated part of the teatcup liner.

13. A teatcup liner according to claim 11, wherein the head (1) is a separate part attached to the barrel (2) to form the teatcup liner.

## Patentansprüche

1. Zitzengummi, der so ausgelegt ist, dass er in einem Gehäuse (4) eines Zitzenbechers eingesetzt wird, der an eine Zitze eines Tiers angesetzt wird, und eine Längsform aufweist, die entlang einer Längsachse (x) verläuft, wobei der Zitzengummi einen Zylinder (2) umfasst, der eine Länge (L) entlang der Längsachse (x) aufweist und einen Innenraum (21) zum Aufnehmen der Zitze definiert, wobei der Zylinder (2), in einem Ruhezustand, eine vieleckige Querschnittsform quer zur Längsachse (x) aufweist, wobei die vieleckige Querschnittsform eine Vielzahl von Eckabschnitten (23) und eine Vielzahl von Seitenabschnitten (24) definiert, die jeweils zwei der Eckabschnitte (23) verbinden, und wobei jeder Eckabschnitt (23) eine Innenfläche (25) mit einer konkaven Krümmung, die der Innenfläche (21) zugewandt ist, und einem Innenradius (r) umfasst, der vom Innenraum (21) zur Innenfläche (25) verläuft,
wobei der Zylinder (2) und der Innenraum (21) die vieleckige Querschnittsform aufweisen, die mindestens drei und höchstens vier Eckabschnitte (23) sowie mindestens drei und höchstens vier Seitenabschnitte (24) definiert,
wobei
jeder der Seitenabschnitte (24) eine erste Wandstärke (T₁) zumindest in einem Mittelteil (28) des Seitenabschnitts (24) entlang der Länge (L) des Zylinders (2) aufweist,
jeder der Eckabschnitte (23) eine zweite Wandstärke (T₂) zumindest im Mittelteil (26) des Eckabschnitts (23) entlang der Länge (L) des Zylinders (2) aufweist, und die erste Wandstärke (T₂) geringer ist als die zweite Wandstärke (T₂), **dadurch gekennzeichnet, dass** der Innenradius (r) für jeden Eckabschnitt (23) gleich ist und dass der Innenradius (r) von jedem der Eckabschnitte (23) im Ruhezustand mindestens 4 mm in einem Mittelteil (26) des Eckabschnitts (23) beträgt, wobei jeder von den Seitenabschnitten (24) im Ruhezustand nach innen in Richtung der Längsachse (x) gebogen ist, und dadurch, dass das Verhältnis der ersten Wandstärke (T₁) zur zweiten Wandstärke (T₂) im Bereich von 0,3 bis 0,7 liegt.

2. Zitzengummi nach Anspruch 1, wobei der Innenradius (r) von jedem der Eckabschnitte (23) mindestens 5 mm im Mittelteil (26) des Eckabschnitts (23) beträgt.

3. Zitzengummi nach Anspruch 1 oder 2, wobei jeder der Seitenabschnitte (24) im Ruhezustand nach innen in Richtung in Richtung der Längsachse (x) entlang der Länge (L) des Zylinders (2) gebogen ist.

4. Zitzengummi nach Anspruch 1 oder 3, wobei jeder Seitenabschnitt (24) eine Innenfläche (27) umfasst, die dem Innenraum (21) zugewandt ist und einen Innenradius (R) aufweist, der von einer Position (P) außerhalb des Innenraums (21) zur Innenfläche (27) verläuft, und wobei der Innenradius (R) von jedem der Seitenabschnitte (24) im Ruhezustand mindestens 20 mm und höchstens 60 mm in einem Mittelteil (28) des Seitenabschnitts (24) beträgt.

5. Zitzengummi nach Anspruch 4, wobei der Innenradius (R) von jedem der Eckabschnitte (24) im Ruhezustand mindestens 30 mm und höchstens 50 mm im Mittelteil (28) des Seitenabschnitts (24) beträgt.

6. Zitzengummi nach Anspruch 4 oder 5, wobei eine Begrenzungslinie (23-24) zwischen dem Eckabschnitt (23) und dem Seitenabschnitt (24) an einem inneren Übergangspunkt angeordnet ist, an dem eine Tangente der Innenfläche (25) des Eckabschnitts (23) und eine Tangente der Innenfläche (27) des Seitenabschnitts (24) parallel verlaufen und miteinander übereinstimmen.

7. Zitzengummi nach einem der vorhergehenden Ansprüche,
wobei jeder Eckabschnitt (23) eine Außenfläche (35) umfasst, die von dem Innenraum (21) abgewandt ist und einen Außenradius (r') aufweist, der vom Innenraum (21) zur Außenfläche (35) verläuft,
wobei jeder Seitenabschnitt (24) eine Außenfläche (37) umfasst, die von dem Innenraum (21) abgewandt ist und einen Außenradius (R') aufweist, der von einer Position außerhalb des Innenraums (21) zur Außenfläche (37) verläuft, und wobei eine Begrenzungslinie (23-24) zwischen dem Eckabschnitt (23) und dem Seitenabschnitt (24) an einem äußeren Übergangspunkt angeordnet ist, an dem eine Tangente der Außenfläche (35) des Eckabschnitts (23) und eine Tangente der Außenfläche (27) des Seitenabschnitts (24) parallel verlaufen und miteinander übereinstimmen.

8. Zitzengummi nach einem der vorhergehenden Ansprüche, wobei das Verhältnis der ersten Wandstärke (T₁) zur zweiten Wandstärke (T₂) ungefähr 0,5 beträgt.

9. Zitzengummi nach einem der vorhergehenden Ansprüche, wobei sich der Zylinder (2) entlang der Länge (L) vom Kopf (1) zum Austrittsabschnitt (3) hin verjüngt.

10. Zitzengummi nach einem der vorhergehenden Ansprüche, wobei der Zylinder (2) und der Innenraum (21), im Ruhezustand, eine ungefähr dreieckige Querschnittsform quer zur Längsachse entlang der Länge (L) vom Kopf (1) zum Austrittsabschnitt (3) aufweisen, wobei die Querschnittsform dadurch drei Eckabschnitte (23) und drei Seitenabschnitte (24) definiert, die jeweils zwei der Eckabschnitte (23) verbinden.

11. Zitzengummi nach einem der vorhergehenden Ansprüche, wobei der Zitzengummi, entlang der Längsachse (x), auch einen Kopf (1) umfasst, der eine Lippe (11) und eine Öffnung (12) für die Zitze umfasst, sowie einen Austrittsabschnitt (3) umfasst, und wobei der Zylinder (2) entlang der Länge (L) vom Kopf (1) zum Austrittsabschnitt (3) verläuft.

12. Zitzengummi nach Anspruch 11, wobei der Kopf (1) ein integrierter Teil des Zitzengummis ist.

13. Zitzengummi nach Anspruch 11, wobei der Kopf (1) ein separater Teil ist, der an dem Zylinder (2) angebracht ist, damit der Zitzengummi entsteht.

## Revendications

1. Manchon trayeur configuré pour être monté dans un étui (4) d'un gobelet trayeur destiné à être appliqué sur un trayon d'un animal, et présentant une forme longitudinale s'étendant le long d'un axe longitudinal (x), le manchon trayeur comprenant un cylindre (2) présentant une longueur (L) le long de l'axe longitudinal (x) et définissant un espace intérieur (21) pour recevoir le trayon, le cylindre (2) présentant, dans un état de repos, une forme de section transversale polygonale transversalement à l'axe longitudinal (x), la forme de section transversale polygonale définissant une pluralité de portions de sommet (23) et une pluralité de portions de côté (24), chacune reliant deux desdites portions de sommet (23), et chaque portion de sommet (23) comprenant une surface intérieure (25) avec une courbure concave faisant face à l'espace intérieur (21) et présentant un rayon intérieur (r) s'étendant de l'espace intérieur (21) à la surface intérieure (25),
dans lequel le cylindre (2) et l'espace intérieur (21) présentant la forme de section transversale polygonale, qui définit au moins trois et au plus quatre portions de sommet (23), et au moins trois et au plus quatre portions de côté (24),
dans lequel
chacune des portions de côté (24) présente une première épaisseur de paroi (T₁) au moins sur une partie centrale (28) de la portion de côté (24) le long de la longueur (L) du cylindre (2),
chacune des portions de sommet (23) présente une seconde épaisseur de paroi (T₂) au moins sur la partie centrale (26) de la portion de sommet (23) le long de la longueur (L) du cylindre (2), et la première épaisseur de paroi (T₂) est inférieure à la seconde épaisseur de paroi (T₂), **caractérisé en ce que** le rayon intérieur (r) est identique pour chaque portion de sommet (23) et **en ce que** le rayon intérieur (r) de chacune des portions de sommet (23), dans l'état de repos, est d'au moins 4 mm sur une partie centrale (26) de la portion de sommet (23), chacune des portions de côté (24), dans l'état de repos, étant incurvée vers l'intérieur vers l'axe longitudinal (x) et **en ce que** le rapport entre la première épaisseur de paroi (T₁) et la seconde épaisseur de paroi (T₂) est compris dans la plage de 0,3 à 0,7.

2. Manchon trayeur selon la revendication 1, dans lequel le rayon intérieur (r) de chacune des portions de sommet (23) est d'au moins 5 mm sur la partie centrale (26) de la portion de sommet (23).

3. Manchon trayeur selon l'une quelconque des revendications 1 et 2, dans lequel chacune des portions de côté (24), dans l'état de repos, est incurvée vers l'intérieur vers l'axe longitudinal (x) le long de la longueur (L) du cylindre (2).

4. Manchon trayeur selon l'une quelconque des revendications 1 et 3, dans lequel chaque portion de côté (24) comprend une surface intérieure (27) faisant face à l'espace intérieur (21) et présentant un rayon intérieur (R) s'étendant d'une position (P) hors de l'espace intérieur (21) à la surface intérieure (27), et dans lequel le rayon intérieur (R) de chacune des portions de côté (24), dans l'état de repos, est d'au moins 20 mm et au plus 60 mm sur une partie centrale (28) de la portion de côté (24).

5. Manchon trayeur selon la revendication 4, dans lequel le rayon intérieur (R) de chacune des portions de côté (24), dans l'état de repos, est d'au moins 30 mm et au plus 50 mm sur la partie centrale (28) de la portion de côté (24).

6. Manchon trayeur selon l'une quelconque des revendications 4 et 5, dans lequel une ligne de séparation (23-24) entre la portion de sommet (23) et la portion de côté (24) est située sur un point de transition intérieur, sur lequel une tangente de la surface intérieure (25) de la portion de sommet (23) et une tangente de la surface intérieure (27) de la portion de côté (24) sont parallèles et coïncident l'une avec l'autre.

7. Manchon trayeur selon l'une quelconque des revendications précédentes,
dans lequel chaque portion de sommet (23) comprend une surface extérieure (35) orientée vers le côté opposé à l'espace intérieur (21) et présentant un rayon extérieur (r') s'étendant de l'espace intérieur (21) à la surface extérieure (35),
dans lequel chaque portion de côté (24) comprend une surface extérieure (37) opposée à l'espace intérieur (21) et présentant un rayon extérieur (R') s'étendant d'une position hors de l'espace intérieur (21) à la surface extérieure (37), et
dans lequel une ligne de séparation (23-24) entre la portion de sommet (23) et la portion de côté (24) est située sur un point de transition extérieur, sur lequel une tangente de la surface extérieure (35) de la portion de sommet (23) et une tangente de la surface extérieure (27) de la portion de côté (24) sont parallèles et coïncident l'une avec l'autre.

8. Manchon trayeur selon l'une quelconque des revendications précédentes, dans lequel le rapport entre la première épaisseur de paroi (T₁) et la seconde épaisseur de paroi (T₂) est d'environ 0,5.

9. Manchon trayeur selon l'une quelconque des revendications précédentes, dans lequel le cylindre (2) s'amincit le long de la longueur (L) de la tête (1) à la portion de sortie (3).

10. Manchon trayeur selon l'une quelconque des revendications précédentes, dans lequel le cylindre (2) et l'espace intérieur (21), dans l'état de repos, présentent une forme de section transversale approximativement triangulaire transversalement à l'axe longitudinal le long de la longueur (L) de la tête (1) à la portion de sortie (3), la forme de section transversale définissant ainsi trois portions de sommet (23) et trois portions de côté (24) chacune reliant deux desdites portions de sommet (23).

11. Manchon trayeur selon l'une quelconque des revendications précédentes, dans lequel le manchon trayeur comprend également, le long de l'axe longitudinal (x), une tête (1) comprenant une lèvre (11) et une ouverture (12) pour le trayon, et une portion de sortie (3), et dans lequel le cylindre (2) s'étend le long de la longueur (L) de la tête (1) à la portion de sortie (3).

12. Manchon trayeur selon la revendication 11, dans lequel la tête (1) fait partie intégrante du manchon trayeur.

13. Manchon trayeur selon la revendication 11, dans lequel la tête (1) est une partie séparée raccordée au cylindre (2) pour former le manchon trayeur.
